# EUROPÄISCHE PATENTSCHRIFT

(11) **EP 0 645 270 B1**
(45) Veröffentlichungstag und Bekanntmachung des Hinweises auf die Patenterteilung: **14.05.1997**
(21) Anmeldenummer: 94112493.5
(22) Anmeldetag: 10.08.1994
(51) Int. Cl.: B60J 7/22

(54) **Windschutz für einen mit einem zurückklappbaren Verdeck versehenen Personenkraftwagen**
Wind deflector for motor vehicle convertible top
Déflecteur de vent pour un véhicule automobile à toit escamotable

(30) Priorität: 28.09.1993 DE 4332938
(43) Veröffentlichungstag der Anmeldung: 29.03.1995
(73) Patentinhaber: Dr.Ing.h.c. F. Porsche Aktiengesellschaft, 70435 Stuttgart (DE)
(72) Erfinder: Reuter, Dieter, D-71139 Ehningen (DE); Just, Jan, D-71229 Leonberg (DE)

(56) Entgegenhaltungen:
- EP-A- 0 394 676
- EP-A- 0 487 843
- DE-A- 3 935 630

## Beschreibung

Die Erfindung bezieht sich auf einen Windschutz für einen mit einem zurückklappbaren Verdeck versehenen Personenkraftwagen gemäß dem Oberbegriff des Anspruchs 1.

Bei einer bekannten Anordnung der eingangs genannten Gattung (US-A-4 838 604) ist hinter den beiden vorderen Sitzen im Fahrgastraum ein Windschutz angeordnet, der von Hand durch eine Schwenkbewegung von einer Nichtgebrauchsstellung in eine Wirkstellung verlagerbar ist und umgekehrt.

Aufgabe der Erfindung ist es, einen Windschutz der eingangs genannten Gattung so auszubilden, daß der Bedienungskomfort erhöht wird und keine manuellen Handgriffe zum Bewegen des Windschutzes von der Nichtgebrauchsstellung in die Wirkstellung mehr erforderlich sind.
Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Koppelung des Windschutzes an das Verdeck der Windschutz beim Zurückklappen des Verdecks selbsttätig in seine Wirkstellung und beim Schließen des Verdecks wieder in seine Nichtgebrauchsstellung bewegt wird, wodurch der Bedienungskomfort des Windschutzes wesentlich erhöht wird. Der Windschutz ist über eine Steuereinrichtung mit dem Verdeck gekoppelt. Die Steuereinrichtung kann mechanisch, hydraulisch, elektrisch, elektronisch oder dgl. ausgebildet sein.

Im Ausführungsbeispiel wird die Steuereinrichtung durch zwei gelenkig miteinander verbundene Lenker gebildet, die einfach und kostengünstig herstellbar sind. Ein Lenker ist dabei starr mit einem Lagerzapfen des Windschutzes verbunden, wogegen der zweite Lenker drehbar mit dem ersten Lenker und dem Verdeckgestänge zusammenwirkt. Ein Ausführungsbeispiel der Erfindung ist in der Zeichnung dargestellt und wird im folgenden näher erläutert:

Es zeigt
- Fig. 1: eine Teilseitenansicht eines Cabriolets mit einem Verdeck und einem Windschutz,
- Fig. 2: eine Einzelheit X der Fig. 1 in größerem Maßstab, aus der die zwischen Verdeck und Windschutz angeordnete Steuereinrichtung hervorgeht und zwar bei geschlossenem Verdeck,
- Fig. 3: eine Ansicht ähnlich Fig. 2 der zwischen Verdeck und Windschutz angeordneten Steuereinrichtung bei zurückgeklapptem Verdeck,
- Fig. 4: eine Teilansicht von schräg hinten auf die Steuereinrichtung, den Windschutz und das Verdeckgestänge.

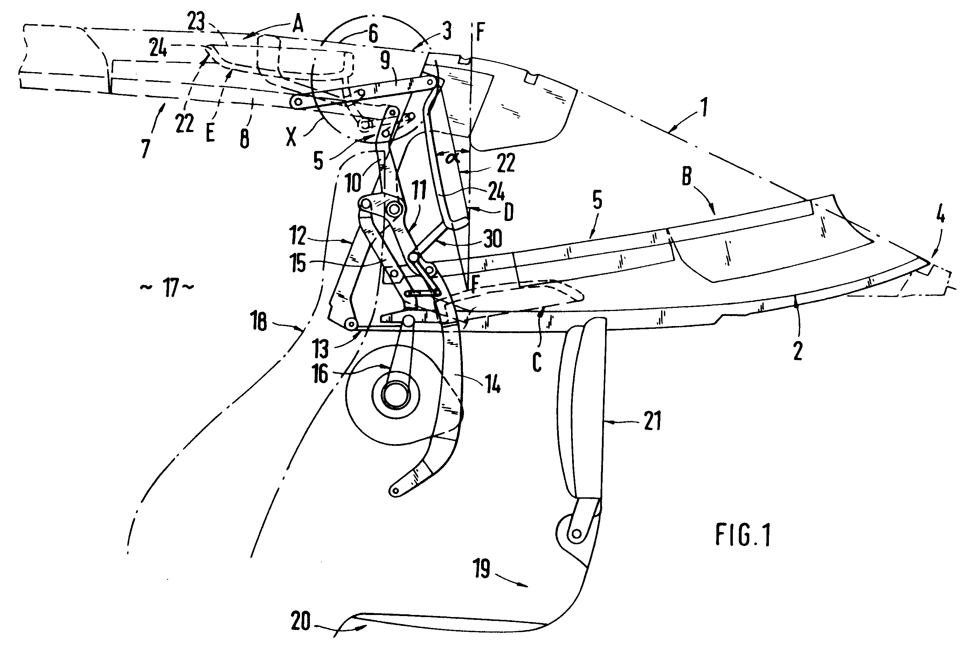

Der in Fig. 1 dargestellte Personenkraftwagen 1 umfaßt oberhalb einer Gürtellinie 2 ein Verdeck 3, das von einer Schließstellung A nach hinten in eine zurückgeklappte Ablagestellung B bewegbar ist und umgekehrt. In der Ablagestellung B liegt das Verdeck 3 etwas oberhalb der Gürtellinie 2 in einem Heckbereich 4. In der Schließstellung A erstreckt sich das Verdeck 3 von einem nicht näher gezeigten Windschutzscheibenrahmen bis zum Heckbereich 4. Das Verdeck 3 setzt sich im Ausführungsbeispiel aus einem Verdeckgestänge 5 und einem Verdeckbezug 6 zusammen. Das Verdeckgestänge 5 umfaßt im dargestellten Bereich einen Dachrahmen 7, der durch seitliche Längsholme 8
und einem benachbart dem oberen Windschutzscheibenrahmen verlaufenden, nicht näher dargestellten querverlaufenden Träger gebildet wird.

Die einteilig ausgebildeten Längsholme 8 sind an beiden Fahrzeuglängsseiten einerseits über einen Dachrahmenlenker 9 und andererseits über einen Hebelarm 10 eines Winkelhebels 11 gelenkig mit einer Hauptverdecksäule 12 verbunden. Die Hauptverdecksäule 12 ist an beiden Fahrzeuglängsseiten jeweils an einem in Höhe der Gürtellinie 2 vorgesehenen Verdecklager 13 schwenkbar gelagert.

Ferner umfaßt das Verdeckgestänge 5 Lenker 14, 15, die mit dem Winkelhebel 11 und einer Antriebsvorrichtung 16 zusammenwirken.
In einem Fahrgastraum 17 des Cabriolets sind vordere Sitze 18 und eine Hintersitzanlage 19 vorgesehen, wobei von den vorderen Sitzen 18 lediglich die Rückenlehne dargestellt ist. Die Hintersitzanlage 19 umfaßt ein Sitzteil 20 und eine schwenkbare Lehne 21.

Damit die auf den vorderen Sitzen 18 befindlichen Insassen bei geöffnetem Verdeck 3 während der Fahrt vor unerwünschter, von rückwärts her einwirkender Zugluft geschützt werden, ist ein Windschutz 22 vorgesehen.

Der Windschutz 22 ist im Ausführungsbeispiel am Verdeckgestänge 5 des Verdecks 3 gelagert. Bei geschlossenem Verdeck 3 verläuft der Windschutz 22 mit geringem Abstand zum darüberliegenden Verdeckbezug 6 des Verdecks 3, wobei der Windschutz 22 annähernd parallel zum Verdeckbezug 6 ausgerichtet ist (Nichtgebrauchsstellung E).

Im Ausführungsbeispiel wird der Windschutz 22 durch einen mit einer Bespannung 23 versehenen Rahmen 24 gebildet. Die Bespannnung 23 bedeckt die vom Rahmen 24 umgebene Fläche vollständig und kann durch ein elastisch verformbares Netz, eine durchsichtige Folie, eine Platte aus Kunststoff, eine Glas- oder Polyglasscheibe oder dergleichen gebildet werden. Der Rahmen 24 ist - in Wirkstellung D und von hinten gesehen - etwa rechteckförmig, trapezförmig, oval oder dergleichen ausgebildet. Im Querschnitt gesehen kann der Rahmen 24 durch ein Rohr oder ein sonstiges Profil gebildet werden.

Der Windschutz 22 erstreckt sich in der Wirkstellung D über die Rückenlehne der Sitze 18 hinaus nach oben und verläuft vorzugsweise über die gesamte Innenraumbreite des Fahrgastraumes 17. Ferner ist der Windschutz 22 gemäß Fig. 1 gegenüber einer vertikalen Hilfsebene F-F leicht nach vorne hin geneigt (Winkel Alpha). Der Windschutz 22 kann jedoch auch annähernd vertikal ausgerichtet sein.

An gegenüberliegenden unteren Eckbereichen 25 des Rahmens 24 sind winkelförmige Lagerzapfen 26 vorgesehen, die mit nach außen gerichteten Endabschnitten 27 in zylindrische Aufnahmen 28 von Lagerböcken 29 eingreifen. Der Windabweiser 22 ist über lösbare Steckverbindungen mit den beiden verdeckseitig angeordneten Lagerböcken 29 verbunden, wodurch eine einfache und schnelle Montage bzw. Demontage des Windschutzes 22 gegeben ist. Jeder Lagerbock 29 ist - in Schließstellung A des Verdecks 3 gesehen - an einem hinteren Endbereich 30 des seitlichen Längsholmes 8 des Verdeckgestänges 5 vorgesehen und durch Befestigungssschrauben mit der Unterseite des Längsholmes 8 verbunden.

Es besteht auch die Möglichkeit, daß der Windschutz 22 durch ein rahmenloses, durchsichtiges, plattenförmiges Element gebildet wird, das an seinen beiden Längsseiten über Lagerelemente am Verdeck 3 befestigt ist.

Erfindungsgemäß ist vorgesehen, daß der Windschutz 22 über eine Steuereinrichtung 31 mit dem Verdeck 3 gekoppelt ist, dergestalt, daß beim Zurückklappen des Verdecks 3 von einer Schließstellung A nach hinten in eine heckseitige Ablagestellung B der Windschutz 22 selbsttätig in seine Wirkstellung bewegt wird und umgekehrt, d.h. die ohnehin erforderliche Bewegung der Verdeckkinematik wird zur Bewegung des Windschutzes 22 ausgenutzt.

Die Steuereinrichtung 31 kann mechanisch, hydraulisch, elektrisch, elektronisch oder dgl. ausgebildet sein.

Im Ausführungsbeispiel ist die lediglich an einer Längsseite des Verdecks 3 vorgesehene Steuereinrichtung 31 mechanisch ausgebildet und wird durch zwei drehbar miteinder verbundene Lenker 32, 33 gebildet, wobei der erste Lenker 32 starr am Windschutz 22 angebracht ist und der zweite Lenker 33 mit dem Verdeckgestänge 5 und dem ersten Lenker 32 gelenkig verbunden ist.

Der etwas längere erste Lenker 32 ist - in Draufsicht gesehen - etwa rechtwinkelig von einem horizontal ausgerichteten quer verlaufenden Bereich 34 des Lagerzapfens 26 weggeführt und einstückig mit diesem ausgebildet.

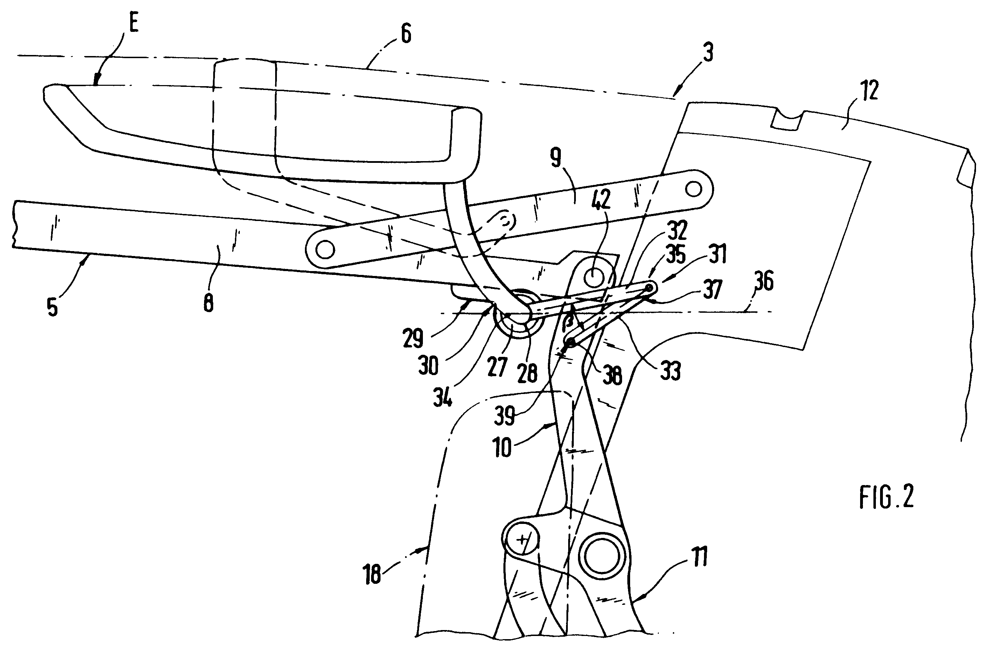

In Schließstellung A des Verdecks 3 erstreckt sich der Lenker 32 nach hinten hin und ist dabei leicht gegenüber einer horizontalen Hilfsebene 36 nach oben angestellt (Fig. 2). Ein hinteres Ende 35 des Lenkers 32 ist drehbar mit einem Ende 37 des etwas kürzeren zweiten Lenkers 33 verbunden. Das andere Ende 38 des zweiten Lenkers 33 ist über eine Steckverbindung 39 mit dem Verdeckgestänge 5 verbunden.
Die Steckverbindung 39 umfaßt einen nach außen gestellten Zapfen 40, der in eine korrespondierende Öffnung 41 des Winkelhebels 11 des Verdeckgestänges 5 eingreift.

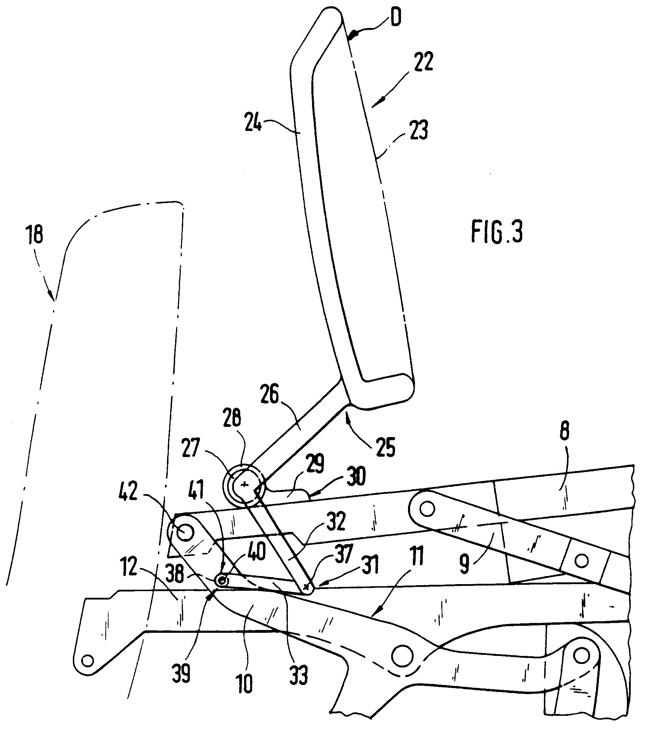

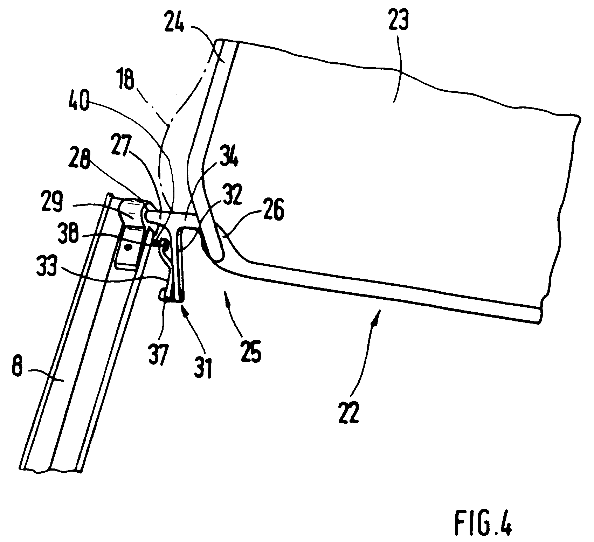

Die Öffnung 41 ist am Hebelarm 10 des Winkelhebels 11 vorgesehen und zwar etwas unterhalb einer Gelenkverbindung 42 von Längsholm 8 und Winkelhebel 11.
Die beiden Lenker 32, 33 verlaufen in Schließstellung A des Verdecks 3 unter einem spitzen Winkel β zueinander. Die beiden Enden 37, 38 des zweiten Lenkers 33 verlaufen in der Draufsicht gesehen mit seitlichem Abstand zueinander, d.h. der Lenker 33 weist eine Abkröpfung auf (Fig. 4).
Beim Zurückschwenken des Verdecks 3 in die heckseitige Ablagestellung (B) werden die Längsholme 8 und die Hauptverdecksäule 12 nach hinten bzw. unten verschwenkt, so daß sie sich übereinanderliegend oberhalb der Gürtellinie 2 erstrecken (Fig. 3).
Der Winkelhebel 11 wird bei dieser Bewegung ebenfalls verschwenkt und verläuft gemaß Fig. 3 annähernd horizontal, während er bei geschlossenem Verdeck A in aufrechter Richtung ausgerichtet ist.
Durch die Lenker 32, 33, die beim Zurückschwenken des Verdeckgestänges 5 ihre Lage zueinander ändern, wird der Windschutz 22 selbsttätig in seine Wirkstellung E bewegt und ist in dieser arretiert.

Die Steuereinrichtung 31 könnte beispielsweise auch durch einen Seilzug, einen elektrischen Antrieb, ein Zahnradgetriebe oder dgl. gebildet werden.

Im Ausführungsbeispiel ist der Windschutz 22 am Verdeckgestänge 5 gelagert. Es besteht jedoch auch die Möglichkeit, daß der Windschutz 22 am feststehenden Aufbau gelagert und über eine Steuereinrichtung 31 mit dem Verdeck 3 verbunden ist.

Wesentlich ist, daß der Windschutz 22 über die Steuereinrichtung 31 beim Zurückklappen des Verdecks 3 selbsttätig in seine Wirkstellung und beim Schließen des Verdecks 3 wieder in seine Nichtgebrauchsstellung bewegt wird, wobei die Bewegung der Verdeckkinematik ausgenutzt wird.

Über eine nicht näher dargestellte, im Bereich der Lagerzapfen 26 vorgesehene Kupplung ist es möglich, den Windschutz 22 bei geöffnetem Verdeck (Ablagestellung B) von einer Wirkstellung E nach unten in eine Ruhestellung F zu bewegen.

## Patentansprüche

1. Windschutz für einen mit einem zurückklappbaren Verdeck versehenen Personenkraftwagen, wobei der Windschutz von einer Nichtgebrauchsstellung in eine Wirkstellung verlagerbar ist und umgekehrt, **dadurch gekennzeichnet**, daß der Windschutz (22) über eine Steuereinrichtung (31) mit dem Verdeck (3) gekoppelt ist, dergestalt, daß beim Zurückklappen des Verdecks (3) in die heckseitige Ablagestellung (B) der Windschutz (22) selbsttätig in seine Wirkstellung (E) bewegt wird.

2. Windschutz nach Anspruch 1, **dadurch gekennzeichnet**, daß die Steuereinrichtung (31) mechanisch, hydraulisch, elektrisch, elektronisch oder dgl. ausgebildet ist.

3. Windschutz nach den Ansprüchen 1 und 2, **dadurch gekennzeichnet**, daß die Steuereinrichtung (31) durch zwei drehbar miteinander verbundene Lenker (32, 33) gebildet wird, wobei der erste Lenker (32) starr am Windschutz (22) angebracht ist und der zweite Lenker (33) drehbar mit dem Verdeckgestänge (5) und dem ersten Lenker (32) gelenkig verbunden ist.

4. Windschutz nach den Ansprüchen 1 bis 3, **dadurch gekennzeichnet**, daß die Steuereinrichtung (31) lediglich an einer Längsseite des Verdecks (3) zwischen Windschutz (22) und Verdeck (3) vorgesehen ist.

5. Windschutz nach den Ansprüchen 1 bis 4, **dadurch gekennzeichnet**, daß der erste Lenker (32) - in der Draufsicht gesehen - etwa rechtwinkelig von einem horizontal ausgerichteten, querverlaufenden Bereich (34) des Lagerzapfens (26) des Windschutzes (22) weggeführt ist.

6. Windschutz nach den Ansprüchen 1 bis 5, **dadurch gekennzeichnet**, daß der zweite Lenker (33) über eine Steckverbindung (39) mit einem Hebelarm (10) eines Winkelhebels (11) des Verdeckgestänges (5) zusammenwirkt.

7. Windschutz nach Anspruch 6, **dadurch gekennzeichnet**, daß die Steckverbindung (39) durch einen abgestellten, nach außen gerichteten Zapfen (40) am zweiten Lenker (33) gebildet wird, der in eine korrespondierende Öffnung (41) des Winkelhebels (11) eingesetzt ist.

8. Windschutz nach einem oder mehreren der vorangegangenen Ansprüche, **dadurch gekennzeichnet**, daß der Windschutz (22) mit den verdeckseitigen Lagerböcken (29) über leicht lösbare Steckverbindungen zusammenwirkt.

## Claims

1. A wind deflector for a passenger vehicle provided with a folding hood, wherein the wind deflector is displaceable from a position of non-use to an operative position and vice versa, **characterised in that** the wind deflector (22) is linked to the hood (3) by way of control means (31) in such a manner that when the hood (3) is folded back into the rear storage position (B), the wind deflector (22) is automatically moved into the operative position (E) thereof.

2. A wind deflector according to Claim 1, **characterised in that** the control means (31) is mechanical, hydraulic, electric, electronic or of similar form .

3. A wind deflector according to Claims 1 and 2, **characterised in that** the control means (31) is formed by means of two guide rods (32, 33) rotatably connected to each other, wherein the first guide rod (32) is rigidly attached to the wind deflector (22) and the second guide rod (33) is rotatably connected to the hood linkage (5) and flexibly connected to the first guide rod (32).

4. A wind deflector according to any one of Claims 1 to 3, **characterised in that** the control means (31) is only provided on one longitudinal side of the hood (3) between the wind deflector (22) and the hood (3).

5. A wind deflector according to any one of Claims 1 to 4, **characterised in that** the first guide rod (32), in plan view, extends substantially at right angles from a horizontal, transversely extending region (34) of the bearing journal (26) of the wind deflector (22).

6. A wind deflector according to any one of Claims 1 to 5, **characterised in that** the second guide rod (33) co-operates by way of a plug connection (39) with a lever arm (10) of an angled lever (11) of the hood linkage (5).

7. A wind deflector according to Claim 6, **characterised in that** the plug connection (39) is formed by means of an outwardly-extending pin (40) positioned on the second guide rod (33) and inserted into a corresponding opening (41) of the angled lever (11).

8. A wind deflector according to any one of the preceding claims, **characterised in that** the wind deflector (22) co-operates with the bearing brackets (29) on the hood by way of easily detachable plug connections.

## Revendications

1. Déflecteur de vent pour une voiture de tourisme pourvue d'une capote rabattable, le déflecteur de vent étant déplaçable d'une position de non-utilisation dans une position active et inversement, caractérisé en ce que le déflecteur de vent (22) est couplé avec la capote (3), par un dispositif de commande (31), de manière que lorsque la capote (3) est rabattue dans la position de rangement (B) arrière, le déflecteur de vent (22) est automatiquement déplacé dans sa position active (E).

2. Déflecteur de vent selon la revendication 1, caractérisé en ce que le dispositif de commande (31) est mécanique, hydraulique, électrique, électronique ou similaire.

3. Déflecteur de vent selon les revendications 1 et 2, caractérisé en ce que le dispositif de commande (31) est formé par deux bras oscillants (32, 33), reliés entre eux de manière à pouvoir tourner, le premier bras oscillant (32) étant placé rigidement sur le déflecteur de vent (22) et le second bras oscillant (33) étant relié articulé et tournant avec la tringlerie (5) de la capote et le premier bras oscillant (32).

4. Déflecteur de vent selon les revendications 1 à 3, caractérisé en ce que le dispositif de commande (31) est prévu uniquement sur un côté longitudinal de la capote (3), entre le déflecteur de vent (22) et la capote (3).

5. Déflecteur de vent selon les revendications 1 à 4, caractérisé en ce que le premier bras oscillant (32) - vu de dessus - s'éloigne à peu près à angle droit d'une zone (34) orientée horizontalement, s'étendant transversalement du tourillon (26) du déflecteur de vent (22).

6. Déflecteur de vent selon les revendications 1 à 5, caractérisé en ce que le second bras oscillant (33) coopère, par un assemblage à emboîtement (39), avec un bras de levier (10) d'un levier coudé (11) de la tringlerie (5) de la capote.

7. Déflecteur de vent selon la revendication 6, caractérisé en ce que l'assemblage à emboîtement (39) est formé par un tenon (40) décalé, dirigé vers l'extérieur, sur le second bras oscillant (33), qui est inséré dans une ouverture (41) correspondante du levier coudé (11).

8. Déflecteur de vent selon une ou plusieurs des revendications précédentes, caractérisé en ce que le déflecteur de vent (22) coopère avec les supports de palier (29) côté capote, par des assemblages à emboîtement facilement amovibles.
